# EUROPEAN PATENT APPLICATION

(11) **EP 1 528 769 A2**
(43) Date of publication of application: **04.05.2005**
(21) Application number: 04021831.5
(22) Date of filing: 14.09.2004
(51) Int. Cl.: H04M 1/725

(54) **Electronic device with wireless communication module**

(30) Priority: 31.10.2003 JP 2003372992
(71) Applicant: Kabushiki Kaisha Toshiba, Tokyo 105-8001 (JP)
(72) Inventor: Tomoda, Ichiro, Toshiba Corporation, Tokyo 105-8001 (JP); Nakasato, Shigemi, Toshiba Corporation, Tokyo 105-8001 (JP); Iwasaki, Junichi, Toshiba Corporation, Tokyo 105-8001 (JP); Ide, Kenichi, Toshiba Corporation, Tokyo 105-8001 (JP); Yamashita, Makoto, Toshiba Corporation, Tokyo 105-8001 (JP); Ushimaru, Chikara, Toshiba Corporation, Tokyo 105-8001 (JP)
(74) Representative: Wenning, Ekkehard

(57) **Abstract**

According to one embodiment of the invention, an electronic device comprises a speaker (11,12), a microphone (15), and a processor that executes pairing process with another electronic device, the processor outputs pairing signal during pairing process. The electronic device further comprises a converter coupled to the speaker, the microphone, and the processor. The converter converts the pairing signal to an audio signal when the speaker (11,12) outputs audio signal to another electronic device, and converts an audio signal to pairing signal when the microphone (15) receives the audio signal. Also, the electronic device includes a wireless communication module coupled to the processor, and the wireless communication module communicates with another electronic device after pairing process.

## Description

This invention relates to an electronic device with a wireless communication module for communicating with another electronic device.

Recently, it is common for personal computers and personal digital assistants to support wireless communications with other devices without any required cable connections. One type of communication protocol of the wireless communication function is BLUETOOTH®, which is a well-known, short range radio link.

Devices complying with BLUETOOTH® wireless communication may execute so-called pairing in which addresses and encryption keys are registered between devices often connected to each other. As a result, the devices can exchange data only therebetween, even if multiple pairs of electronic devices are in wireless communications in the same area.

When executing the pairing, first, one electronic device executes a processing called remote device detection. The "remote device detection" involved detecting what responses are generated by dispatching an inquiry electronic wave. The electronic device after executing the remote device detection displays a list of responding devices complying with BLUETOOTH®. If this list is displayed, a user may select a desired communication device to be wirelessly connected from the list and executes a predetermined connecting operation. At this time, if that communication device is provided with security, an input of a personal identification number (hereinafter "PIN") code is requested.

Recently, the wireless communication function based on the BLUETOOTH® standard has begun to be implemented on a mobile device as small as a display for displaying the list of the devices or a pointing device for selecting a desired communicating party is difficult to implement.

For this reason, Japanese Patent Application Publication (KOKAI) No. 2002-73565 discloses an electronic device provided with a transmitting portion and a receiving portion for transmitting and receiving an infrared light signal so as to exchange a PIN code through the infrared light signal. According to this electronic device, by such a simple operation as pressing switches with the transmitting portion and receiving portion of electronic devices desired to be paired in an opposed state, the pairing processing can be completed.

However, although the method disclosed in the reference does not require any display, pointing device or the like, a necessity of providing an infrared light signal transmitting/receiving portion is generated. Therefore, an electronic device which is demanded to be reduced in size, weight, and price such as a head set is very difficult to adopt such a component.

The present invention has been achieved in views of such conditions and an object of the invention is to provide an electronic device in which transmission and reception of pairing information with an audio signal are realized and a pairing processing method for the same device.

To achieve the above-described object, the electronic device of the present invention is characterized by comprising: a wireless communication module; a processor coupled to the wireless communication module, the processor initiates a pairing process with a second electronic device before commencing wireless communications with the second electronic device, the processor outputting a pairing signal during the pairing process; a converter coupled to the processor, the converter converts the pairing signal output from the processor to an audio signal; and a speaker coupled to the converter, the speaker outputs the audio signal converted by the converter during the pairing process.

Further, the pairing processing method of the present invention is characterized by comprising the steps of: generating a pairing signal for transmission from a first wireless communication device, the pairing signal being a device address of the first wireless communication device in accordance with a predetermined wireless communication scheme; converting the pairing signal to an audio signal; and outputting the converted audio signal to a second wireless communication device.

Because an electronic device such as a head set device is already provided with a speaker and microphone, the pairing between two head set devices is enabled without adding any hardware by converting pairing information to an audio signal and outputting the audio signal from the speaker, and then converting the audio signal obtained through the microphone to pairing information.

According to the present invention, it is possible to provide an electronic device which realizes transmission and reception of pairing information with an audio signal, and a pairing processing method for the same device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary diagram showing an electronic device according to an embodiment of the present invention;
FIG. 2 is an exemplary block diagram showing a component configuration of hardware of the electronic device according to the embodiment;
FIG. 3 is an exemplary block diagram illustrating a module configuration of software of the electronic device according to the embodiment;
FIG. 4 is an exemplary flow chart for illustrating an overall process of the electronic device according to the embodiment;
FIG. 5 is an exemplary flow chart for illustrating a pairing process of the electronic device and an audio output task which cooperates with the pairing process according to the embodiment;
FIG. 6 is an exemplary flow chart for illustrating the pairing process of the electronic device and an audio input task which cooperates with the pairing task according to the embodiment; and
FIG. 7 is an exemplary diagram for showing a condition that two electronic devices having DTMF transmission/reception functions are paired according to the embodiment.

Various embodiments according to the present invention will be described hereinafter with reference to the accompanying drawings. In general, according to one embodiment of the invention, an electronic device comprises a speaker, a microphone, and a processor. The processor executes a pairing process with another electronic device and outputs a pairing signal during the pairing process. The electronic device further comprises a converter coupled to the speaker, the microphone, and the processor. The converter converts the pairing signal to an audio signal when the speaker outputs audio signal to another electronic device, and converts an audio signal to a pairing signal when the microphone receives the audio signal. Also, the electronic device includes a wireless communication module coupled to the processor, and it performs wireless communication with another electronic device after the pairing process.

An embodiment of the present invention will be described with reference to the accompanying drawings.

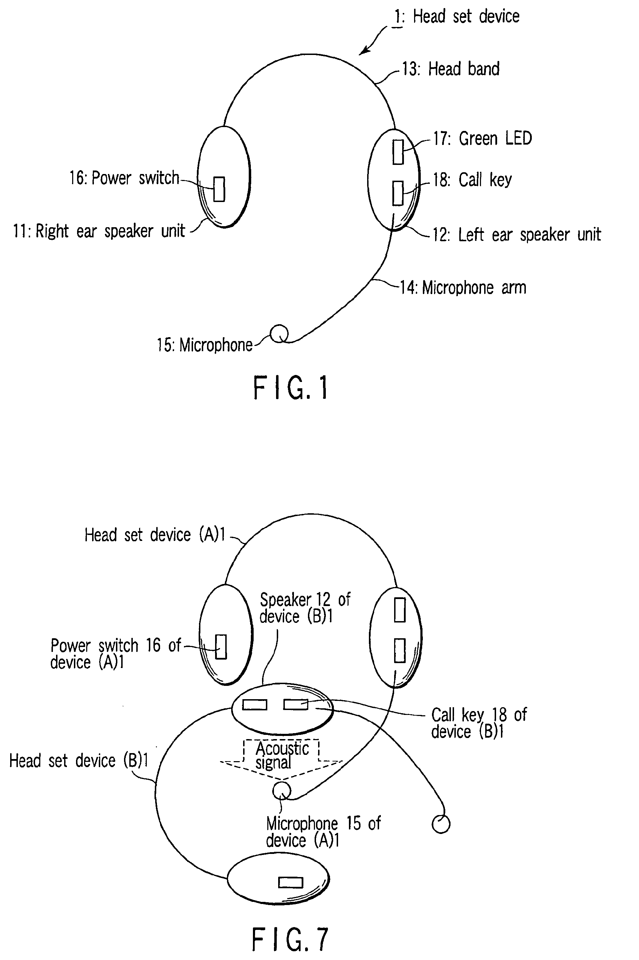

FIG. 1 shows an electronic device according to an embodiment of the present invention. The electronic device is, in this embodiment, a head set device 1 provided with a wireless communication function, and for example, connected to another head set device 1 so that remote voice communications are enabled among plural users. Assume that this head set device 1 executes voice communications with a connecting party according to a communication system specified by a Head Set Profile (hereinafter "HSP") which is one of the BLUETOOTH® standards, "Specification of Bluetooth System Version 1.1" issued by Bluetooth Special Interest Group on Feb. 22, 2001, so-called Bluetooth Specification v1.1.

The head set device 1 has two speaker units 11, 12 for the right ear and left ear respectively. The two speaker units 11, 12 are provided on both ends of a head band 13. An end of a microphone arm 14 is attached to the left ear speaker unit 12 and a microphone 15 is provided on the other end of the microphone arm 14. Further, the right ear speaker unit 11 has a power switch 16, while the left ear speaker unit 12 has a green light emitting diode (hereinafter "LED") 17 and a CALL key 18.

The power switch 16 is a switch for turning ON/OFF the power of the head set device 1. The CALL key 18 is a key for instructing start/end of voice communications with another wireless communication device. In this head set device 1, interpretations about the power switch 16 and CALL key 18 are distinguished depending on whether the power switch 16 and CALL key 18 are pressed longer than a predetermined time (long-time pressing) or shorter than the time (short-time pressing). Although it is permissible to allocate a proper function to any of the long-time pressing and the short-time pressing, here, it is assumed that when both the power switch 16 and the CALL key 18 are pressed in a short time, their proper functions activate. The operation in case of the long-time pressing will be described later.

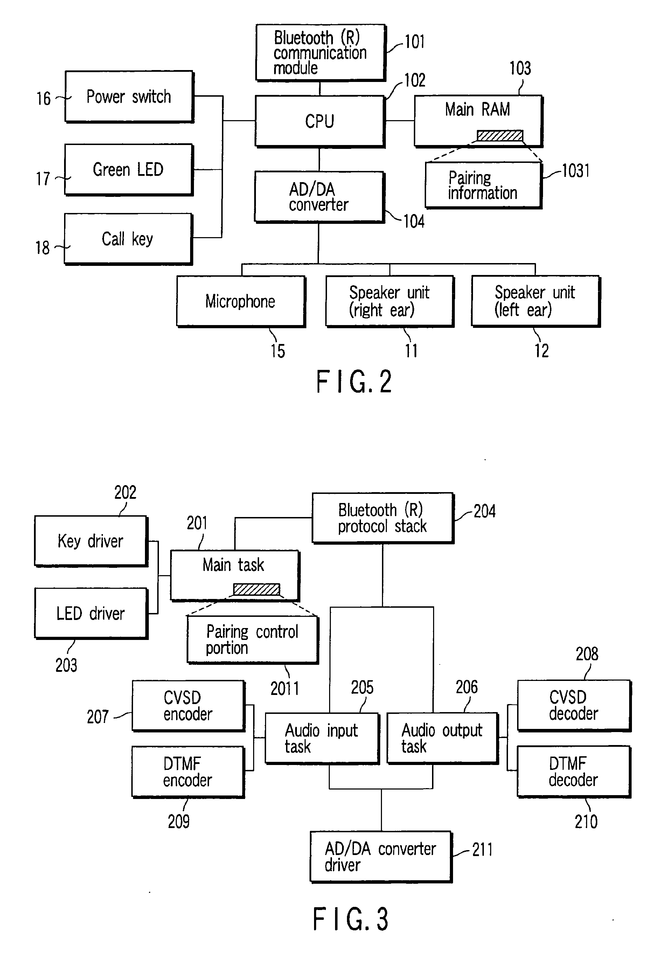

FIG. 2 shows the configuration of components of hardware of the head set device 1.

The head set device 1 comprises the right ear speaker unit 11, left ear speaker unit 12, microphone 15, power switch 16, green LED 17 and CALL key 18 shown in FIG. 1 and further, a BLUETOOTH® communication module 101 (hereinafter "BT communication module"), a CPU 102, a main RAM 103 and an AD/DA converter 104 as shown in FIG. 2.

The BT communication module 101 is a wireless communication module complying with the BLUETOOTH® standard, and executes wireless voice communications based on the aforementioned HSP standard. The CPU 102 controls the entire head set device 1 and executes various programs stored in the main RAM 103. The main RAM 103 stores various programs that the CPU 102 executes and various kinds of data to be used in these programs. The various programs stored in the main RAM 103 contain pairing information 1031 which will be described later. The AD/DA converter 104 converts an analog voice signal inputted through the microphone 15 to a digital signal or converts a digital voice signal to an analog signal, and then outputs the obtained signal from the two speaker units 11, 12.

FIG. 3 shows the module configuration of software of the head set device 1.

A main task 201 is a main program for controlling the entire system and provided with a pairing control portion 2011, which will be describe later. A key driver 202 is a device driver for detecting that the power switch 16 and the CALL key 18 are pressed and capable of distinguishing the long-time pressing from the short-time pressing upon the detection. Here, it is assumed that pressing for two or more seconds is detected as the long-time pressing while pressing for less than two seconds is detected as the short-time pressing. The LED driver 203 is a device driver that controls light of the green LED 17.

A BLUETOOTH® protocol stack 204 (hereinafter "BT protocol stack") is a software module for executing the HSP protocol procedure. An audio input task 205 is a module that processes audio data inputted from the microphone 15 and transmits the audio data to the BT protocol stack 204. An audio output task 206 is a module that processes audio data received from the BT protocol stack 204 and outputs the audio data to the speakers.

A Continuously Variable Slope Delta (CVSD) encoder 207 is a subroutine for converting so-called PCM audio data that undergoes pulse code modulation to CVSD data. The CVSD is a standard audio coding system specified by HSP. A CVSD decoder 208 is a subroutine for converting the CVSD data to PCM audio data. A Dual Tone MultiFrequency (DTMF) encoder is a subroutine for converting a BLUETOOTH® device address (hereinafter "BD_ADDR") to a DTMF signal string. The DTMF is a tone signal to be used for a push-button phone. A DTMF encoder 209 is a subroutine for converting the DTMF signal to a BD_ADDR.

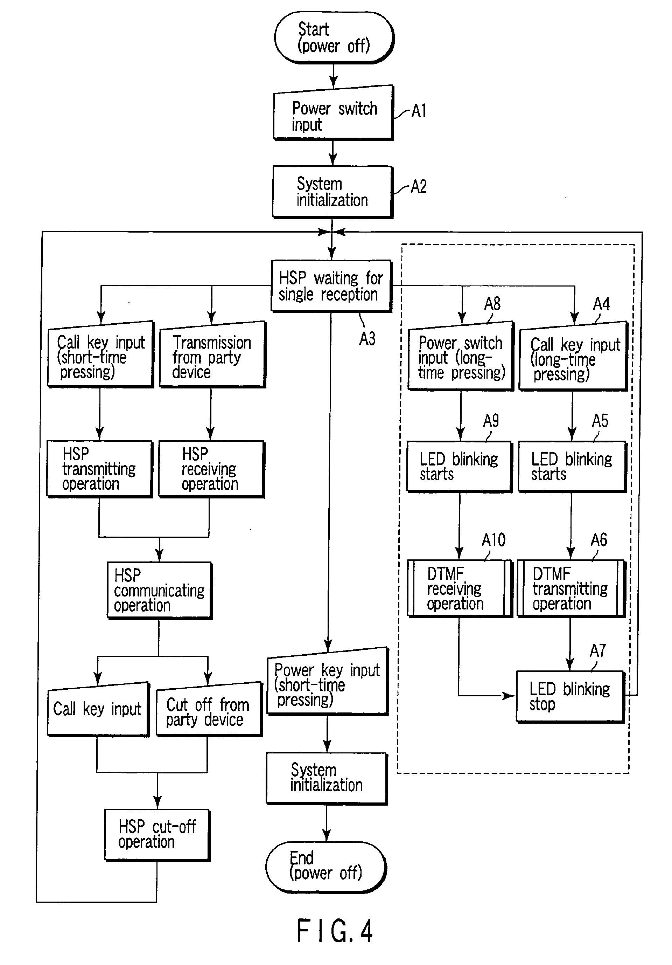

Next, the flow of processing in the entire system in the head set device 1 comprised of the above-described hardware configuration and software configuration will be described with reference to FIG. 4. In the flow chart, a portion to the right side with respect to the center (a portion surrounded by dotted lines) is a portion concerning the pairing of this embodiment, while the other portion indicates a normal operating portion of the HSP. Hereinafter, the procedure based on a BLUETOOTH® pairing method (hereinafter "pairing process") with audio signals, which is a feature of this embodiment, will be described with reference to FIG. 4.

If the power switch 16 is pressed under a state in which power is kept off, this head set device 1 starts up (block A1). After system initialization processing is executed (block A2), the head set device 1 is changed into an HSP waiting state for signal reception (block A3) .

With this state, if the CALL key 18 is kept pressed for two seconds or more (block A4), the pairing control portion 2011 issues a blink command to the LED driver 203 so as to start blinking of the green LED 17 to indicate that the DTMF transmission operation is being executed (block A5), and then executes the DTMF transmission operation in which the BD_ADDR stored as pairing information 1031 is converted to DTMF signals and outputted through the speaker units 11, 12 in the form of acoustic signals (block A6).

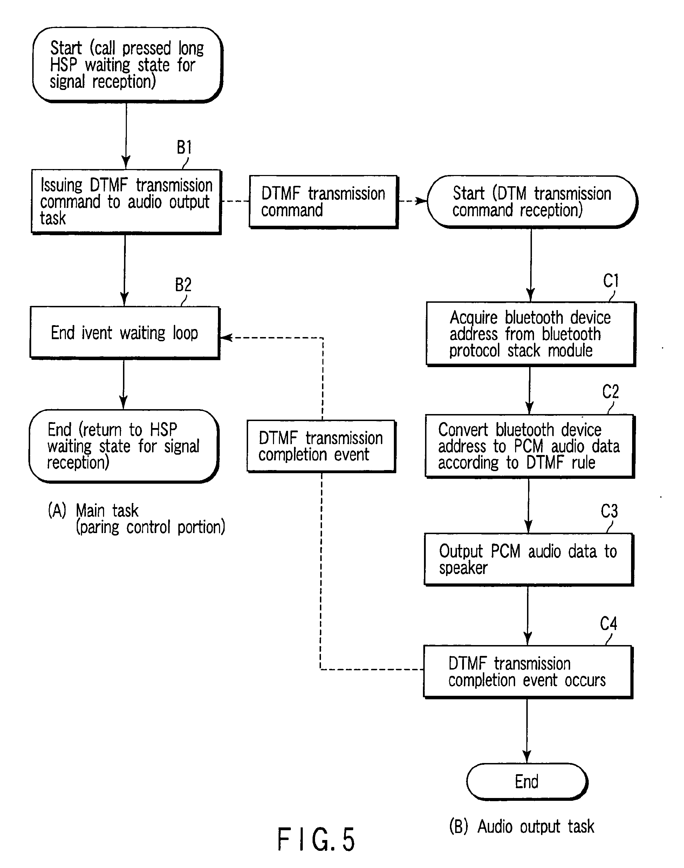

FIG. 5 shows the operation flow of the pairing control portion 2011 and the audio output task 206 which cooperates with the pairing control portion 2011.

The pairing control portion 2011, first, issues a DTMF transmission command to the audio output task 206 (block B1) and waits for an end of the DTMF transmission by end event waiting loop (block B2). On the other hand, the audio output task 206 having received this command inquires the BT protocol stack 204 and acquires a BD_ADDR of its own station (block C1). The BD_ADDR (pairing information 1031) is a byte string of 6 bytes and the BT protocol stack 204 reads out this value from the main RAM 103 at startup.

Next, the audio output task 206 converts this BD_ADDR to PCM audio data according to the DTMF rule (block C2). The DTMF contains totally 16 signal patterns. Therefore, the 4-bit information amount can be expressed. The audio output task 206 converts the BD_ADDR, namely 6 bytes or 48 bits, to successive PCM audio data each being 4 bits in size so as to generate a total of 12 DTMF signals.

Then, the audio output task 206 outputs such a generated PCM audio data to the AD/DA converter driver 211. Consequently, the AD/DA converter 211 outputs this PCM audio data to the AD/DA converter 104, so that the DTMF tone is outputted from the speaker units 11, 12 in the form of acoustic signals (block C3). That is, due to the above-described processing, the BD_ADDR is outputted as an acoustic signal in the form of the DTMF tone. After this PCM audio data is outputted to the AD/DA converter driver 211, the audio output task 206 issues a DTMF transmission completion event to the pairing control portion 2011 (block C4). Because the end event waiting loop of block B2 is released due to occurrence of the DTMF transmission completion event, the pairing control portion 2011 returns to the flow shown in FIG. 4, in which it issues a blinking stop command to the LED driver 203 to stop the blinking of the green LED 17 in order to indicate that the DTMF transmission operation has ended (block A7) and then returns to the HSP waiting state for signal reception of block A3.

On the other hand, when the power switch 16 is kept pressed for two seconds or more in the HSP waiting state for signal reception (step A8), the pairing control portion 2011 of FIG. 3 issues a blinking command to the LED driver 203 to start the blinking of the green LED 17 in order to indicate that the DTMF reception operation is turned on (step A9). Thereafter, the DTMF reception operation is executed in which the audio signal inputted through the microphone 15 is converted to a BD_ADDR according to the DTMF rule and registered in the BT protocol stack 204 as connecting destination information (block A10).

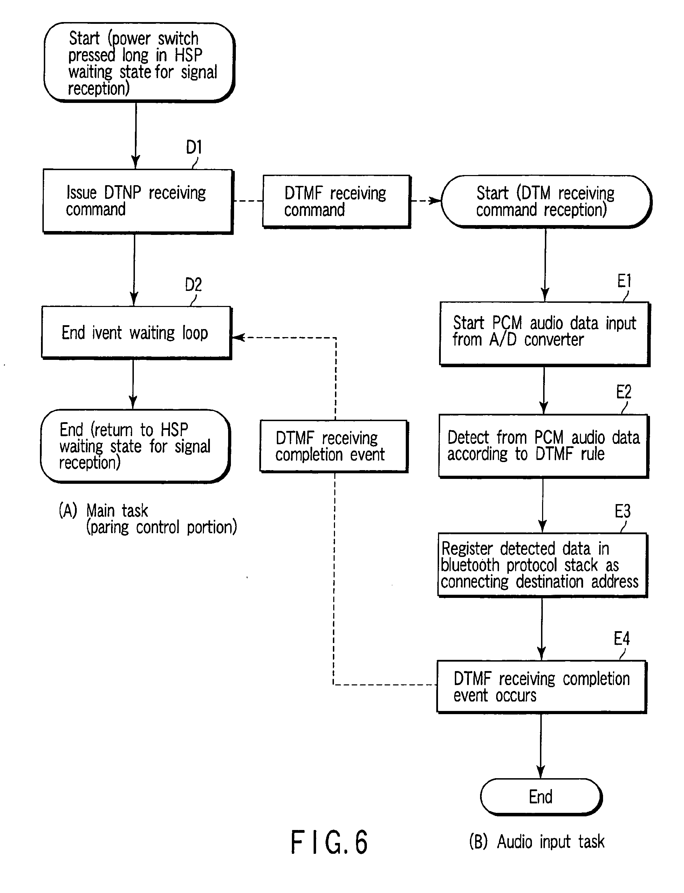

FIG. 6 shows the operation flow of the pairing control portion 2011 and the audio input task 205 that cooperates with this pairing control portion 2011 in this block A10.

The pairing control portion 2011 issues a DTMF reception command to the audio input task 205 (block D1) and waits for an end of the DTMF reception in the end event waiting loop (block D2). On the other hand, after receiving this command, the audio input task 205 instructs the AD/DA converter driver 211 to start fetching of the PCM audio data from the microphone 15 (block E1) .

Next, the audio input task 205 detects the DTMF signal according to the DTMF rule from the inputted PCM audio data and converts the signal to corresponding 4-bit data (block E2).

The audio input task 205 records the data acquired by such conversion as a BD_ADDR successively from the upper bit side, and when 6 bytes are formed, the DTMF detection processing is terminated. The 6-byte data generated in this way is registered in the BT protocol stack 204 as a BD_ADDR of a connecting destination (block E3). That is, due to the above-described processing, the acoustic signal is converted to the BD_ADDR and registered in the BT protocol stack 204 as the address of the connecting destination. When this registration ends, the audio input stack 205 issues a DTMF reception completion event to the pairing control portion 2011 (block E4). Because generation of the DTMF reception completion event releases the end event waiting loop in block B2, the pairing control portion 2011 returns to the flow of FIG. 4 and issues a blink stop command to the LED driver 203 to stop the blinking of the green LED 17 in order to indicate that the DTMF reception operation ends (block A7) and then, returns to the HSP waiting state for signal reception in block A3.

FIG. 7 shows a condition that two head set devices (A)1, and (B)1 having the above-described transmission/reception functions are paired. Here, an example that the BD_ADDR of the head set device (B)1 is set in the head set device (A)1 is shown.

In this case, a user positions both head set devices such that the microphone 15 of the head set device (A)1 comes close to, for example, the left ear speaker unit 12 of the head set device (B)1. Therefore, a sound outputted from the left ear speaker unit 12 of the head set device (B)1 enters the microphone 15 of the head set device (A)1.

With this state, the user presses the power switch 16 of the head set device (A)1 for two seconds or more. Consequently, the head set device (A)1 starts the DTMF reception operation. Thereafter, the user presses the CALL key 18 of the head set device (B)1 for two seconds or more. Consequently, the head set device (B)1 starts the DTMF transmission operation.

As a result of the above operation, the BD_ADDR is outputted from the left ear speaker unit 12 as an acoustic signal by the DTMF transmission processing of the head set device (B)1 and the acoustic signal is inputted to the microphone 15 of the head set device (A)1. The acoustic signal is turned to the BD_ADDR by the DTMF reception processing of the head set device (A)1 and set in the BT protocol stack 204. In this way, the BD_ADDR of the head set device (B)1 is set in the BT protocol stack of the head set device (A)1. Subsequently, the user presses the CALL key of the head set device (A)1 for less than two seconds, which enables connection to the head set device (A)1.

Although according to this embodiment, the DTMF system is employed as the acoustic signal, an acoustic signal system other than the DTMF system may be utilized. For example, it is permissible to use voice synthetic recognition, that is, the portion of the DTMF transmission of this embodiment is executed by voice synthesis and the portion of the DTMF reception is executed by voice recognition.

Further, it is possible to apply a method for intensifying reliability by adding an error detecting code for determining presence or absence of an error or an error correction code for correcting an error when the BD_ADDR is converted to the PCM audio data.

The present invention is not restricted to the above-described embodiment, but its composition elements may be modified within a scope not departing from the gist thereof for embodying the invention. Further, by combining the plural composition elements disclosed in the above-described embodiment appropriately, various kinds of inventions may be formed. For example, it is permissible to delete some composition elements indicated in the embodiment. Further, it is permissible to combine the composition elements of different embodiments appropriately.

Additional advantages and modifications will readily occur to those skilled in the art. Therefore, the invention in its broader aspects is not limited to the specific details and representative embodiments shown and described herein. Further, by combining the plural composition elements disclosed in the above-described embodiment appropriately, various kinds of inventions may be formed. For example, it is permissible to delete some composition elements indicated in the embodiment. Further, it is permissible to combine the composition elements of different embodiments appropriately. Accordingly, various modifications may be made without departing from the spirit or scope of the general inventive concept as defined by the appended claims and their equivalents.

## Claims

1. An electronic device, **characterized by** comprising:
a wireless communication module (101);
a processor (102) coupled to the wireless communication module, the processor initiates a pairing process with a second electronic device before commencing wireless communications with the second electronic device, the processor outputting a pairing signal during the pairing process;
a converter(104) coupled to the processor, the converter converts the pairing signal output from the processor to an audio signal; and
a speaker (11,12) coupled to the converter, the speaker outputs the audio signal converted by the converter during the pairing process.

2. The electronic device according to claim 1, **characterized in that** the converter adds an error detecting code to be used for detecting presence of an error to the pairing signal during conversion of the pairing signal.

3. The electronic device according to claim 1, **characterized in that** the converter adds an error correction code to be used for correcting an error to the pairing signal during conversion of the pairing signal.

4. The electronic device according to claim 1, **characterized in that** the pairing signal is a wireless device address converted to audio data according to a predetermined modulation scheme.

5. The electronic device according to claim 4, **characterized in that** the audio signal is a plurality of DTMF signals corresponding to a corresponding plurality of audio data bit sequences forming the audio data.

6. The electronic device according to claim 1, **characterized in that** the pairing process performed by the processor comprises exchanging a wireless device address of the electronic device, being the pairing signal converted to the audio signal, with the second electronic device

7. The electronic device according to claim 6, **characterized in that** the pairing process further comprises receiving the audio signal and reconverting the audio signal to a wireless device address of the second electronic device for placement within memory of the electronic device.

8. The electronic device according to claim 1 being a head set device.

9. The electronic device according to claim 1, **characterized by** further comprising a light emitting diode (17) which emits light during the pairing process.

10. An electronic device, **characterized by** comprising:
a microphone (15);
a converter (104) coupled to the microphone, the converter converts an audio signal to a pairing signal;
a processor (102) coupled to the converter, the processor executes a pairing process with a second electronic device; and
a wireless communication module (101) coupled to the processor, the wireless communication module enables wireless communications with the second electronic device after the pairing process.

11. The electronic device according to claim 10, **characterized in that** the converter determines presence of an error using an error detecting code attached to the pairing signal.

12. The electronic device according to claim 10, **characterized in that** the converter corrects an error using an error correction code attached to the pairing signal.

13. The electronic device according to claim 10, **characterized by** further comprising a light emitting diode which emits light during the pairing process.

14. An electronic device, **characterized by** comprising:
a speaker (11,12);
a microphone (15);
a processor (102) executing a pairing process with a s electronic device, the processor outputs a pairing signal during pairing process;
a converter (104) coupled to the speaker, the microphone and the processor, the converter converts the pairing signal to an audio signal when the speaker outputs audio signal to a second electronic device, and converts an audio signal to a pairing signal when the microphone receives the audio signal; and
a wireless communication module (101) coupled to the processor, the wireless communication module to enable wireless communications with the second electronic device after the pairing process.

15. A pairing processing method, **characterized by** comprising the steps of:
generating (B1) a pairing signal for transmission from a first wireless communication device, the pairing signal being a device address of the first wireless communication device in accordance with a predetermined wireless communication scheme;
converting (C2) the pairing signal to an audio signal; and
outputting (C3) the converted audio signal to a second wireless communication device.

16. The pairing processing method according to claim 15, **characterized in that** the predetermined wireless communication scheme is Bluetooth®.

17. The pairing processing method according to claim 15 **characterized by** further comprising the step of reconverting (E2) the audio signal received by the second wireless communication device back to the pairing signal for storage within the second wireless communication device.

18. A pairing processing method, **characterized by** comprising the steps of:
acquiring (E1) an audio signal from a wireless communication device;
converting (E2) the acquired audio signal to a pairing signal, the pairing signal being a device address of the wireless communication device; and
setting (E3) the device address of the wireless communication device into memory.

19. A pairing processing method according to claim 18, **characterized in that** the predetermined wireless communication scheme is Bluetooth®.
